(19) Europäisches Patentamt
European Patent Office
Office européen des brevets

(11) **EP 1 627 263 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(21) Anmeldenummer: **04726180.5**

(22) Anmeldetag: **07.04.2004**

(51) Int Cl.:
***G05B 13/02*** (2006.01)

(86) Internationale Anmeldenummer:
**PCT/EP2004/050468**

(87) Internationale Veröffentlichungsnummer:
**WO 2004/107066 (09.12.2004 Gazette 2004/50)**

(54) **VERFAHREN SOWIE COMPUTERPROGRAMM MIT PROGRAMMCODE-MITTELN UND COMPUTERPROGRAMM-PRODUKT ZUR ERMITTLUNG EINES ZUKÜNFTIGEN SYSTEMVERHALTENS EINES DYNAMISCHEN SYSTEMS**

METHOD, COMPUTER PROGRAM WITH PROGRAM CODE MEANS, AND COMPUTER PROGRAM PRODUCT FOR DETERMINING A FUTURE BEHAVIOR OF A DYNAMIC SYSTEM

PROCEDE ET PROGRAMME INFORMATIQUE COMPORTANT DES MOYENS DE CODE DE PROGRAMME ET PROGRAMME INFORMATIQUE POUR DETERMINER UN COMPORTEMENT FUTUR D'UN SYSTEME DYNAMIQUE

(84) Benannte Vertragsstaaten:
**DE FR GB**

(30) Priorität: **27.05.2003 DE 10324045**

(43) Veröffentlichungstag der Anmeldung:
**22.02.2006 Patentblatt 2006/08**

(73) Patentinhaber: **SIEMENS AKTIENGESELLSCHAFT**
**80333 München (DE)**

(72) Erfinder:
• **GROTHMANN, Ralph**
**81735 München (DE)**
• **TIETZ, Christoph**
**85521 Ottobrunn (DE)**

• **ZIMMERMANN, Hans-Georg**
**82319 Starnberg/Percha (DE)**

(56) Entgegenhaltungen:
**WO-A-02/27620    WO-A-02/27654**
**US-A- 5 461 699    US-A- 5 521 813**
**US-A- 5 873 251**

• **MAZARKO J ET AL: "APPLICATION OF STATISTICAL AND NEURAL APPROACHES TO THE DAILY LOAD PROFILES MODELLING IN POWER DISTRIBUTION SYSTEMS" 1999 IEEE TRANSMISSION AND DISTRIBUTION CONFERENCE. NEW ORLEANS, LA, APRIL 11 16, 1999, IEEE TRANSMISSION AND DISTRIBUTION CONFERENCE, NEW YORK, NY : IEEE, US, Bd. VOL. 1, 11. April 1999 (1999-04-11), Seiten 320-325, XP000955041 ISBN: 0-7803-5516-4**

**Beschreibung**

Die Erfindung betrifft ein Verfahren sowie ein Computerprogramm mit Programmcode-Mitteln und ein Computerprogramm-Produkt zur Ermittlung eines zukünftigen Systemverhaltens eines dynamischen Systems.

Aus [1] ist es bekannt, zur Beschreibung und Modellierung eines dynamischen Systems bzw. eines dynamischen Prozesses und dessen Prozessverhaltens eine neuronale Struktur, beispielsweise ein neuronales Netz, einzusetzen.

Allgemein wird ein dynamisches System bzw. ein dynamischer Prozess durch eine Zustandsübergangsbeschreibung, die für einen Beobachter des dynamischen Prozesses nicht sichtbar ist, und eine Ausgangsgleichung, die beobachtbare Größen des technischen dynamischen Prozesses beschreibt, beschrieben.

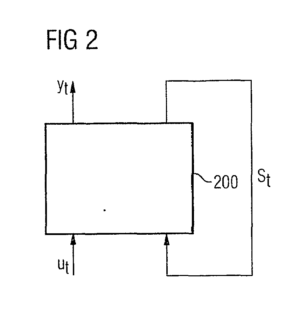

Ein solches Prozessverhalten eines dynamischen Prozesses ist in Fig.2 dargestellt.

Der dynamische Prozess 200 bzw. ein dynamisches System 200, in dem der dynamische Prozess abläuft, unterliegt dem Einfluss einer externen Eingangsgröße u vorgebbarer Dimension, wobei eine Eingangsgröße $u_t$ zu einem Zeitpunkt t mit $u_t$ bezeichnet wird:

$$u_t \in \mathfrak{R}^l,$$

wobei mit l eine natürliche Zahl bezeichnet wird.

Die Eingangsgröße $u_t$ zu einem Zeitpunkt t verursacht eine Veränderung des dynamischen Prozesses.

Ein innerer Zustand $s_t$ ($s_t \in \mathfrak{R}^m$) vorgebbarer Dimension m zu einem Zeitpunkt t ist für einen Beobachter des dynamischen Systems 200 nicht beobachtbar.

In Abhängigkeit vom inneren Zustand $s_t$ und der Eingangsgröße $u_t$ wird ein Zustandsübergang des inneren Zustandes $s_t$ des dynamischen Prozesses verursacht und der Zustand des dynamischen Prozesses geht über in einen Folgezustand $s_{t+1}$ zu einem folgenden Zeitpunkt t+1.

Dabei gilt:

$$s_{t+1} = f(s_t, u_t). \qquad (1)$$

wobei mit f(.) eine allgemeine Abbildungsvorschrift bezeichnet wird.

Eine von einem Beobachter des dynamischen Systems 200 beobachtbare Ausgangsgröße $y_t$ zu einem Zeitpunkt t hängt ab von der Eingangsgröße $u_t$ sowie dem inneren Zustand $s_t$.

Die Ausgangsgröße $y_t$ ($y_t \in \mathfrak{R}^n$) ist vorgebbarer Dimension n.

Die Abhängigkeit der Ausgangsgröße $y_t$ von der Eingangsgröße $u_t$ und dem inneren Zustand $s_t$ des dynamischen Prozesses ist durch folgende allgemeine Vorschrift gegeben:

$$y_t = g(s_t), \qquad (2)$$

wobei mit g(.) eine allgemeine Abbildungsvorschrift bezeichnet wird.

Zur Beschreibung des dynamischen Systems 200 wird in [1] eine neuronale Struktur aus miteinander verbundenen Rechenelemente in Form eines neuronalen Netzes miteinander verbundener Neuronen eingesetzt. Die Verbindungen zwischen den Neuronen des neuronalen Netzes sind gewichtet. Die Gewichte des neuronalen Netzes sind in einem Parametervektor v zusammengefasst.

Somit hängt ein innerer Zustand eines dynamischen Systems, welches einem dynamischen Prozess unterliegt, gemäß folgender Vorschrift von der Eingangsgröße $u_t$ und dem inneren Zustand des vorangegangenen Zeitpunktes $s_t$ und dem Parametervektor v ab:

$$s_{t+1} = NN(v, s_t, u_t), \qquad (3)$$

wobei mit NN(.) eine durch das neuronale Netz vorgegebene Abbildungsvorschrift bezeichnet wird.

Diese Beschreibung des dynamischen Systems 200 gemäß Beziehung (3) wird auch als "Forecast Approach" bezeichnet.

Alternativ dazu lässt sich das dynamische System auch durch:

$$s_t = f(s_{t-1}, u_t) \qquad\qquad (1')$$

mit

$$s_t = NN(v, s_{t-1}, u_t) \qquad\qquad (3')$$

beschreiben, was als "Consistency Approach" bezeichnet wird. "Forecast Approach" und "Consistency Approach" führen zu geringfügigen strukturellen Unterschieden in den jeweiligen Netzstrukturen, sind aber gleichwertige, alternativ verwendbare Beschreibungsformen für dynamische Systeme.

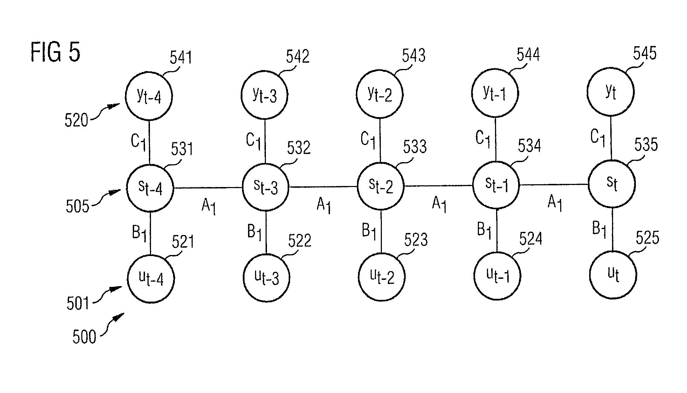

Aus [2] ist eine weitere neuronale Struktur zur Beschreibung des dynamischen Systems 200, ein als Time Delay Recurrent Neural Network (TDRNN) bezeichnetes neuronales Netz, bekannt. Das bekannte TDRNN ist in Fig.5 als ein über eine endliche Anzahl von Zeitpunkten (dargestellt 5 Zeitpunkte: t-4, t-3, t-2, t-1, t) entfaltetes neuronales Netz 500 dargestellt.

Das in Fig.5 dargestellte neuronale Netz 500 weist eine Eingangsschicht 501 mit fünf Teileingangsschichten 521, 522, 523, 524 und 525 auf, die jeweils eine vorgebbare Anzahl Eingangs-Rechenelemente enthalten, denen Eingangsgrößen $u_{t-4}$, $u_{t-3}$, $u_{t-2}$, $u_{t-1}$ und $u_t$ zu vorgebbaren Zeitpunkten t-4, t-3, t-2, t-1 und t, d.h. im weiteren beschriebene Zeitreihenwerte mit vorgegebenen Zeitschritten, anlegbar sind.

Eingangs-Rechenelemente, d.h. Eingangsneuronen, sind über variable Verbindungen mit Neuronen einer vorgebbaren Anzahl versteckter Schichten 505 (dargestellt 5 verdeckte Schichten) verbunden.

Dabei sind Neuronen einer ersten 531, einer zweiten 532, einer dritten 533, einer vierten 534 und einer fünften 535 versteckten Schicht jeweils mit Neuronen der ersten 521, der zweiten 522, der dritten 523, der vierten 524 und der fünften 525 Teileingangsschicht verbunden.

Die Verbindungen zwischen der ersten 531, der zweiten 532, der dritten 533, der vierten 534 und der fünften 535 versteckten Schicht mit jeweils der ersten 521, der zweiten 522, der dritten 523, der vierten 524 und der fünften 525 Teileingangsschicht sind jeweils gleich. Die Gewichte aller Verbindungen sind jeweils in einer ersten Verbindungsmatrix $B_1$ enthalten.

Ferner sind die Neuronen der ersten versteckten Schicht 531 mit ihren Ausgängen mit Eingängen von Neuronen der zweiten versteckten Schicht 532 gemäß einer durch eine zweite Verbindungsmatrix $A_1$ gegebene Struktur verbunden. Die Neuronen der zweiten versteckten Schicht 532 sind mit ihren Ausgängen mit Eingängen von Neuronen der dritten versteckten Schicht 533 gemäß einer durch die zweite Verbindungsmatrix $A_1$ gegebene Struktur verbunden. Die Neuronen der dritten versteckten Schicht 533 sind mit ihren Ausgängen mit Eingängen von Neuronen der vierten versteckten Schicht 534 gemäß einer durch die zweite Verbindungsmatrix $A_1$ gegebene Struktur verbunden. Die Neuronen der vierten versteckten Schicht 534 sind mit ihren Ausgängen mit Eingängen von Neuronen der fünften versteckten Schicht 535 gemäß einer durch die zweite Verbindungsmatrix $A_1$ gegebene Struktur verbunden.

In den versteckten Schichten, der ersten versteckten Schicht 531, der zweiten versteckten Schicht 532, der dritten versteckten Schicht 533, der vierten versteckten Schicht 534 und der fünften versteckten Schicht 535 werden jeweils "innere" Zustände oder "innere" Systemzustände $s_{t-4}$, $s_{t-3}$, $s_{t-2}$, $s_{t-1}$, und $s_t$ eines durch das TDRNN beschriebenen dynamischen Prozesses an fünf aufeinanderfolgenden Zeitpunkten t-4, t-3, t-2, t-1 und t repräsentiert.

Die Angaben in den Indizes in den jeweiligen Schichten geben jeweils den Zeitpunkt t-4, t-3, t-2, t-1 und t an, auf die sich jeweils die an den Ausgängen der jeweiligen Schicht abgreifbaren bzw. zuführbaren Signale beziehen ($u_{t-4}$, $u_{t-3}$, $u_{t-2}$, $u_{t-1}$, $u_t$).

Eine Ausgangsschicht 520 weist fünf Teilausgangsschichten, eine erste Teilausgangsschicht 541, eine zweite Teilausgangsschicht 542, eine dritte Teilausgangsschicht 543, eine vierte Teilausgangsschicht 544 sowie eine fünfte Teilausgangsschicht 545 auf. Neuronen der ersten Teilausgangsschicht 541 sind gemäß einer durch eine Ausgangs-Verbindungsmatrix $C_1$ gegebenen Struktur mit Neuronen der ersten versteckten Schicht 531 verbunden. Neuronen der zweiten Teilausgangsschicht 542 sind ebenfalls gemäß der durch die Ausgangs-Verbindungsmatrix $C_1$ gegebenen Struktur mit Neuronen der zweiten versteckten Schicht 532 verbunden. Neuronen der dritten Teilausgangsschicht 543 sind gemäß der Ausgangs-Verbindungsmatrix $C_1$ mit Neuronen der dritten versteckten Schicht 533 verbunden. Neuronen der vierten Teilausgangsschicht 544 sind gemäß der Ausgangs-Verbindungsmatrix $C_1$ mit Neuronen der vierten versteckten Schicht 534 verbunden. Neuronen der fünften Teilausgangsschicht 545 sind gemäß der Ausgangs-Verbin-

dungsmatrix $C_1$ mit Neuronen der fünften versteckten Schicht 535 verbunden. An den Neuronen der Teilausgangsschichten 541, 542, 543, 544 und 545 sind die Ausgangsgrößen für jeweils einen Zeitpunkt t-4, t-3, t-2, t-1, t abgreifbar $(y_{t-4}, y_{t-3}, y_{t-2}, y_{t-1}, y_t)$.

Der Grundsatz, dass äquivalente Verbindungsmatrizen in einem neuronalen Netz zu einem jeweiligen Zeitpunkt die gleichen Werte aufweisen, wird als Prinzip der sogenannten geteilten Gewichtswerte (Shared Weights) bezeichnet.

Die aus [2] bekannte und als Time Delay Recurrent Neural Network (TDRNN) bezeichnete Anordnung wird in einer Trainingsphase derart trainiert, dass zu einer Eingangsgröße $u_t$ jeweils eine Zielgröße $y_t^d$ an einem realen dynamischen System ermittelt wird. Das Tupel (Eingangsgröße, ermittelte Zielgröße) wird als Trainingsdatum bezeichnet. Eine Vielzahl solcher Trainingsdaten bilden einen Trainingsdatensatz.

Dabei weisen zeitlich aufeinanderfolgende Tupel $(u_{t-4}, y_{t-4}^d)$ $(u_{t-3}, y_{t-3}^d)$, $(u_{t-2}, y_{t-2}^d)$ der Zeitpunkte (t-4, t-3, t-3, ...) des Trainingsdatensatzes jeweils einen vorgegeben Zeitschritt auf.

Mit dem Trainingsdatensatz wird das TDRNN trainiert. Eine Übersicht über verschiedene Trainingsverfahren ist ebenfalls in [1] und [4] zu finden.

Es.ist an dieser Stelle zu betonen, dass lediglich die Ausgangsgrößen $y_{t-4}, y_{t-3}, ..., y_t$ zu Zeitpunkten t-4, t-3, ..., t des dynamischen Systems 200 erkennbar sind. Die "inneren" Systemzustände $s_{t-4}, s_{t-3}, ..., s_t$ sind nicht beobachtbar.

In der Trainingsphase wird üblicherweise folgende Kostenfunktion E minimiert:

$$E = \frac{1}{T} \sum_{t=1}^{T} \left(y_t - y_t^d\right)^2 \to \min_{f,g}, \qquad (4)$$

wobei mit T eine Anzahl berücksichtigter Zeitpunkte bezeichnet wird.

Aus [5] und [6] sind Weiterentwicklungen der aus [2] bekannten und als Time Delay Recurrent Neural Network (TDRNN) bezeichneten neuronalen Struktur bekannt.

Die Weiterentwicklungen aus [5] sind insbesondere geeignet zur Ermittlung zukünftiger Zustände eines dynamischen Prozesses, was als "overshooting" bezeichnet wird.

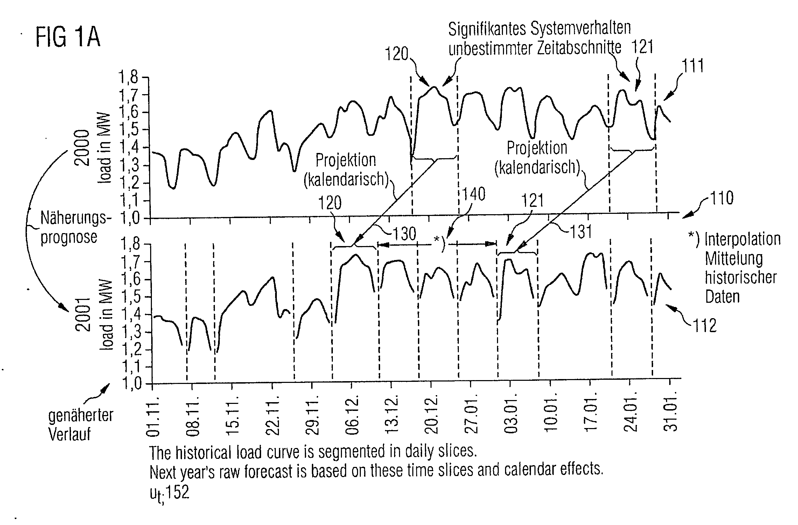

Fig.1a aus [5] zeigt eine Grundstruktur, die den aus [5] bekannten Weiterentwicklungen zugrunde liegt.

Die Grundstruktur ist ein über drei Zeitpunkte t, t+1, t+2 entfaltetes neuronales Netz.

Sie weist eine Eingangsschicht auf, die eine vorgebbare Anzahl von Eingangsneuronen enthält, denen Eingangsgrößen $u_t$ zu vorgebbaren Zeitpunkten t, d.h. im weiteren beschriebene Zeitreihenwerte mit vorgegebenen Zeitschritten, anlegbar sind.

Die Eingangsneuronen, sind über variable Verbindungen mit Neuronen einer vorgebbaren Anzahl versteckter Schichten (dargestellt 3 verdeckte Schichten) verbunden.

Dabei sind Neuronen einer ersten versteckten Schicht mit Neuronen der ersten Eingangsschicht verbunden.

Die Verbindung zwischen der ersten versteckten Schicht mit der ersten Eingangsschicht weist Gewichte auf, die in einer ersten Verbindungsmatrix B enthalten sind.

Ferner sind die Neuronen der ersten versteckten Schicht mit ihren Ausgängen mit Eingängen von Neuronen einer zweiten versteckten Schicht gemäß einer durch eine zweite Verbindungsmatrix A gegebene Struktur verbunden. Die Neuronen der zweiten versteckten Schicht sind mit ihren Ausgängen mit Eingängen von Neuronen einer dritten versteckten Schicht gemäß einer durch die zweite Verbindungsmatrix A gegebene Struktur verbunden.

In den versteckten Schichten, der ersten versteckten Schicht, der zweiten versteckten Schicht und der dritten versteckten Schicht werden jeweils "innere" Zustände oder "innere" Systemzustände $s_t$, $s_{t+1}$ und $s_{t+2}$ des beschriebenen dynamischen Prozesses an drei aufeinanderfolgenden Zeitpunkten t, t+1 und t+2 repräsentiert.

Die Angaben in den Indizes in den jeweiligen Schichten geben jeweils den Zeitpunkt t, t+1, t+2 an, auf die sich jeweils die an den Ausgängen der jeweiligen Schicht abgreifbaren bzw. zuführbaren Signale ($u_t$) beziehen.

Eine Ausgangsschicht 120 weist zwei Teilausgangsschichten, eine erste Teilausgangsschicht und eine zweite Teilausgangsschicht, auf. Neuronen der ersten Teilausgangsschicht sind gemäß einer durch eine Ausgangs-Verbindungsmatrix C gegebenen Struktur mit Neuronen der ersten versteckten Schicht verbunden. Neuronen der zweiten Teilausgangsschicht sind ebenfalls gemäß der durch die Ausgangs-Verbindungsmatrix C gegebenen Struktur mit Neuronen der zweiten versteckten Schicht verbunden.

An den Neuronen der Teilausgangsschichten sind die Ausgangsgrößen für jeweils einen Zeitpunkt t+1, t+2 abgreifbar $(y_{t+1}, y_{t+2})$.

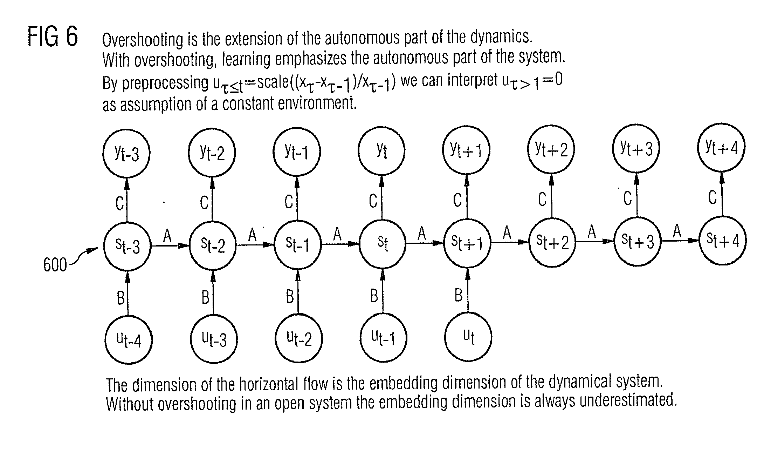

Eine weitere Weiterentwicklung dieser Grundstruktur aus [5] ist in Fig.6 dargestellt.

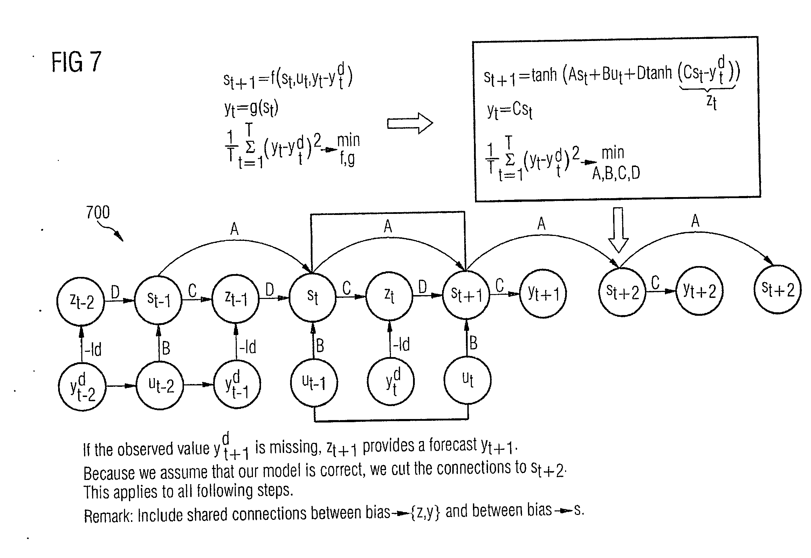

Weiterentwicklungen der TDRNN-Struktur aus [6], sogenannte Error-Correction-Recurrent-Neural-Networks ECRNN), betreffen einen strukturell bedingten Fehler-Korrektur-Mechanismus, welcher als struktureller Bestandteil in eine neuronale Struktur integriert ist. Fig.7 zeigt eine grundlegende Struktur mit entsprechenden funktionalen Beziehungen eines ECRNN.

Aus [7] ist eine weitere neuronale Struktur zur Beschreibung des dynamischen Systems 200, ein als Causal-Retro-Causal Time Delay Recurrent Neural Network (kurz Causal-Retro-Causal Neural Network; CRCNN) bezeichnetes neuronales Netz, bekannt.

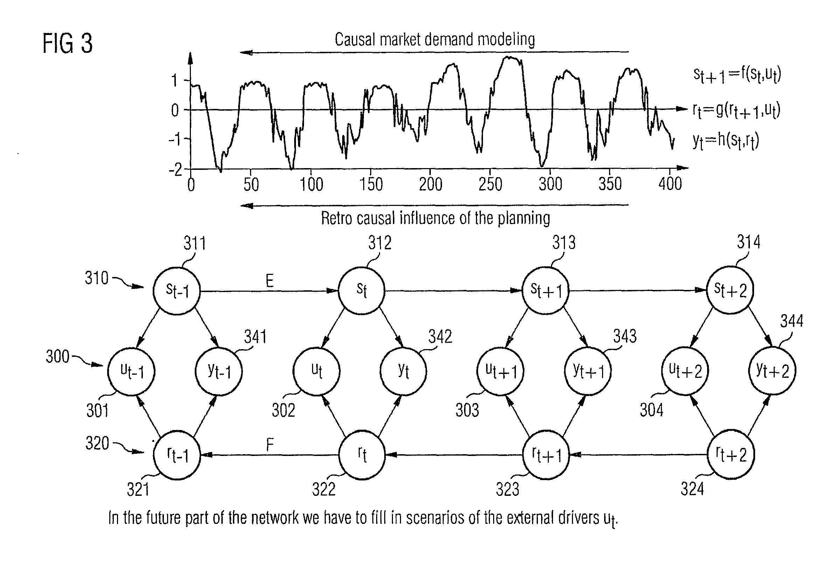

Fig.3 zeigt eine grundlegende Struktur 300 mit entsprechenden funktionalen Beziehungen eines CRCNN.

Bei diesem CRCNN sind zwei neuronale Teilstrukturen 310, 320 miteinander gekoppelt. Dabei hängen ein erster innerer Teilzustand $s_t$ (311 - 314) der ersten neuronalen Teilstruktur 310 und ein zweiter innerer Teilzustand $r_t$ (321 - 324) der zweiten neuronalen Teilstruktur 320 gemäß folgenden Vorschriften von der Eingangsgröße $u_t$ (301 - 304), dem ersten inneren Teilzustand $s_{t-1}$ (311 - 314), dem zweiten inneren Teilzustand $r_{t+1}$ (321 - 324) sowie Parametervektoren $v_s$, $v_t$, $v_y$ ab:

$$s_t = NN(v_s, s_{t-1}, u_t), \qquad (8)$$

$$r_t = NN(v_r, r_{t+1}, u_t) \qquad (9)$$

$$y_t = NN(v_y, s_t, r_t) \qquad (10)$$

Verbindungen zwischen den Neuronen des CRCNN sind gewichtet. Die Gewichte sind in Parametervektoren $v_s$, $v_t$, $v_y$ zusammengefasst.

Das CRCNN 300 gemäß Fig.3 ist ein über vier Zeitpunkte, t-1, t, t+1 und t+2, entfaltetes Neuronales Netz (vgl. TDRNN, Fig.5).

Grundzüge eines über eine endliche Anzahl von Zeitpunkten entfaltetes Neuronalen Netzes sind in [2] und im obigen im Zusammenhang mit dem bekannten TDRNN (vgl. Fig.5) beschrieben.

In [3] ist ferner ein Überblick über Grundlagen neuronaler Netze und die Anwendungsmöglichkeiten neuronaler Netze im Bereich der Ökonomie zu finden.

Die bekannten Anordnungen und Verfahren weisen insbesondere den Nachteil auf, dass durch sie ein zu beschreibendes dynamisches System nur unzureichend genau beschrieben und damit zukünftige Entwicklungen des Systems nur unzureichend genau prognostiziert werden können.

Dies gilt insbesondere für dynamische Systeme, welche einem planerischen Einfluss unterliegen, d.h. dynamische Systeme, welche nicht nur rein marktgetrieben sind.

Das Dokument US 5 461 699 A offenbart ein System und ein Verfahren zur Vorhersage von Daten basierend auf einem neuronalen Netz. Als Eingangsdaten des neuronalen Netzes werden historische Daten sowie eine statistische Vorhersage von Daten verwendet. Die statistische Vorhersage wird basierend auf einem statistischen Modell erzeugt, welches eine Regressionstechnik oder andere statistische Techniken verwenden kann. Somit liegt der Erfindung das Problem zugrunde, ein Verfahren zur Ermittlung eines zukünftigen Systemverhaltens eines dynamischen Systems anzugeben, welches Verfahren nicht den Nachteilen der bekannten Anordnungen und Verfahren, insbesondere deren Ungenauigkeiten, unterliegen.

Diese Aufgabe wird durch das Verfahren sowie durch das Computerprogramm mit Programmcode-Mitteln und das Computerprogramm-Produkt zur Ermittlung eines zukünftigen Systemverhaltens eines dynamischen Systems mit den Merkmalen gemäß dem jeweiligen unabhängigen Patentanspruch gelöst.

Bei dem Verfahren zur Ermittlung eines zukünftigen Systemverhaltens eines dynamischen Systems wird unter Verwendung eines bekannten Systemsverhaltens des dynamischen Systems durch einen Ähnlichkeitsvergleich bzw. Ähnlichkeitsanalyse eine Näherung für das zukünftige Systemverhalten ermittelt ("Similarity Analysis").

Dann wird unter Verwendung der Näherung für das zukünftige Systemverhalten des dynamischen Systems und unter Verwendung einer neuronalen Netzstruktur das zukünftige Systemverhalten ermittelt ("Causality Analysis"), wobei die Näherung für das zukünftige Systemverhalten des dynamischen Systems der neuronalen Netzstruktur als Eingangsgröße zugeführt wird und eine Ausgangsgröße der neuronalen Netzstruktur das zukünftige Systemverhalten repräsentiert. Die neuronale Netzstruktur weist dabei zwei miteinander gekoppelte Teilstrukturen auf, wobei eine erste neuronale Teilstruktur derart angepasst ist, dass deren erstes Abbildungsverhalten ein Vorwärtsverhalten des dynamischen Systems beschreibt und wobei eine zweite neuronale Teilstruktur derart angepasst ist, dass deren zweites Abbildungsverhalten ein Rückwärtsverhalten des dynamischen Systems beschreibt.

Anschaulich gesehen stellt die Erfindung eine Verbindung einer Ähnlichkeitsanalyse ("Similarity Analysis") mit einer Kausalitätsanalyse ("Causality Analysis") unter Verwendung einer neuronalen Netzstruktur dar.

Dabei wird die Ähnlichkeitsanalyse dazu eingesetzt, um aus einem historischen Systemverhalten eine Näherung eines zukünftigen (zu erwartenden) Systemverhaltens zu ermitteln. Basierend auf dieser Näherung wird anschließend gleich einer Nachkorrektur unter Verwendung der neuronalen Netzstruktur das zukünftige Systemverhalten bestimmt bzw. prognostiziert.

Diese zweistufige bzw. kombinierte Vorgehensweise, nämlich zuerst eine Näherungsermittlung durch eine Ähnlichkeitsanalyse mit anschließender Nachkorrektur unter Verwendung einer neuronalen Netzstruktur, ist insbesondere geeignet, um das Systemverhalten von sogenannten "Human Controlled" Systemen (HCS) zu prognostizieren.

Unter solchen HCS sind solche Systeme zu verstehen, welche einem kontrollierenden und/oder planerisch eingreifenden Einfluss unterliegen.

Beispiele für solche HCS sind ein Energieverbrauch, ein Stromverbrauch oder eine Gasverbrauch bzw. entsprechende E-nergieverbrauchsverhalten.

Der Energie- bzw. Strom-/Gasverbrauch hängt dabei ab von einem Angebot und einer Nachfrage von bzw. nach Energie. Ein Zusammenspiel von Angebot und Nachfrage unterliegt zwar marktmechanischen (ökonomischen) Gesetzmäßigkeiten bzw. Mechanismen. Allerdings kann durch Planung und entsprechendes zur Verfügung stellen von Angebotsmengen an Energie in das Zusammenspiel bzw. in die Markdynamik, d.h. in das System, eingegriffen werden.

Insbesondere sind bei der Erfindung solche neuronale Netzstrukturen (im Rahmen der Kausalitätsanalyse) anzuwenden, welche insbesondere für eine Wirkungs-Ursachenanalyse (Kausalitätsanalyse) geeignet sind.

Dynamische Systeme werden üblicherweise als Ursache-Wirkungs-zusammenhänge (vgl. Ausführungen zu Fig.2, Beziehungen (1) bis (3)) formuliert, welche durch die aus [1],[2] oder [5] bekannten neuronalen Strukturen abgebildet werden können. Diese Ursache-Wirkungszusammenhänge finden in diesen neuronalen Strukturen darin Ausdruck, dass ein bei diesen neuronalen Strukturen erzeugter Informationsfluss zeitlich vorwärts, d.h. von der Vergangenheit in die Zukunft, gerichtet ist. Solches wird als Vorwärtsverhalten bezeichnet. Ursachen in Eingangsgrößen $u_t$ zu vorangegangenen Zeitpunkten (t-2), (t-1), ... führen zu (bemerkbaren) Wirkungen in Ausgangsgrößen $y_t$ zum Zeitpunkt (t bzw. t+1). Dabei werden die Eingangsgrößen $u_t$ durch die neuronale Ursachen-Wirkungs-Struktur auf die Ausgangsgrößen $y_t$ abgebildet.

Dieser "vorwärtsgerichtete" Informationsfluss ist insbesondere geeignet, um den marktmechanischen Einfluss zu berücksichtigen.

Diese "eindimensionalen" (vorwärtsgerichteten) Strukturen für die Ursache-Wirkungs-Zusammenhänge können erweitert werden mit einer neuronalen Teilstruktur, welche eine Wirkungs-Ursachenanalyse durchführt und damit eine kausale Synthese vorbereitet.

Bei dieser (Wirkungs-Ursache-)Erweiterungsstruktur bzw. Wirkungs-Ursache-Struktur wird ein zeitlich rückwärts gerichteter Informationsfluss, d.h. ein von der Zukunft in die Vergangenheit gerichteter Informationsfluss, erzeugt. Solches wird als Rückwärtsverhalten bezeichnet. Wirkungen in Ausgangsgrößen $y_t$ zum Zeitpunkt (t) "führen" bzw. haben ihre Ursachen in Eingangsgrößen $u_t$ zum Zeitpunkt (t-1), (t-2), .... Dabei werden in umgekehrter Weise zur Ursachen-Wirkungs-Struktur Ausgangsgrößen $y_t$ (als Eingangsgrößen der Erweiterungsstruktur) auf die Eingangsgrößen $u_t$ (als Ausgangsgrößen der Erweiterungsstruktur) abgebildet.

Dieser "rückwärtsgerichtete" Informationsfluss ist insbesondere geeignet, um den planerischen und/oder kontrollierenden Einfluss zu berücksichtigen.

Die Erfindung ist insbesondere geeignet, zu einer Prognose des zukünftigen Systemverhaltens des dynamischen Systems. Diese Prognose kann abgeleitet werden aus dem ermittelten zukünftige Systemverhalten.

Das Computerprogramm mit Programmcode-Mitteln ist eingerichtet, um alle Schritte gemäß dem erfindungsgemäßen Verfahren durchzuführen, wenn das Programm auf einem Computer ausgeführt wird.

Das Computerprogramm-Produkt mit auf einem maschinenlesbaren Träger gespeicherten Programmcode-Mitteln ist eingerichtet, um alle Schritte gemäß dem erfindungsgemäßen Verfahren durchzuführen, wenn das Programm auf einem Computer ausgeführt wird.

Die Anordnung sowie das Computerprogramm mit Programmcode-Mitteln, eingerichtet um alle Schritte gemäß dem erfinderischen Verfahren durchzuführen, wenn das Programm auf einem Computer ausgeführt wird, sowie das Computerprogramm-Produkt mit auf einem maschinenlesbaren Träger gespeicherten Programmcode-Mitteln, eingerichtet um alle Schritte gemäß dem erfinderischen Verfahren durchzuführen, wenn das Programm auf einem Computer ausgeführt wird, sind insbesondere geeignet zur Durchführung des erfindungsgemäßen Verfahrens oder einer seiner nachfolgend erläuterten Weiterbildungen.

Dabei können die beschriebenen Softwarelösungen auch dezentral bzw. verteilt realisiert sein, d.h. dass Teile des Computerprogramms oder Teile des Computerprogramm-Produkts - auch als eigenständige Teillösungen - auf verschiedenen (verteilten) Computern ablaufen bzw. von diesen ausgeführt werden oder auf verschiedenen Speichermedien gespeichert sind.

Bevorzugte Weiterbildungen der Erfindung ergeben sich aus den abhängigen Ansprüchen.

Die im weiteren beschriebenen Weiterbildungen beziehen sich sowohl auf das Verfahren als auch das Computerprogramm mit Programmcode-Mitteln und das Computerprogramm-Produkt.

Die Erfindung und die im weiteren beschriebenen Weiterbildungen können sowohl in Software als auch in Hardware, bei spielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem das Computerprogramm mit Programmcode-Mitteln gespeichert ist, welches die Erfindung oder Weiterbildung ausführt.

Auch kann die Erfindung oder jede im weiteren beschriebene Weiterbildung durch ein Computerprogrammerzeugnis realisiert sein, welches ein Speichermedium aufweist, auf welchem das Computerprogramm mit Programmcode-Mitteln gespeichert ist, welches die Erfindung oder Weiterbildung ausführt.

Bei eine Weiterbildung weist die neuronale Netzstruktur zwei miteinander gekoppelte Teilstrukturen auf.

Eine erste neuronale Teilstruktur ist derart angepasst, dass deren erstes Abbildungsverhalten ein Vorwärtsverhalten des dynamischen Systems beschreibt.

Diese erste "vorwärtsgerichtete" neuronale Netzstruktur, welche durch die aus [1],[2] oder [5] bekannten neuronalen Strukturen abgebildet werden kann, ist insbesondere geeignet, um Ursache-Wirkungszusammenhänge (vgl. Ausführungen zu <u>Fig.2</u>, Beziehungen (1) bis (3)) nachzubilden bzw. zu erkennen.

Dieser Ursache-Wirkungszusammenhang findet in dieser ersten neuronalen Teilstruktur darin Ausdruck, dass ein bei dieser ersten neuronalen Teilstruktur erzeugter Informationsfluss zeitlich vorwärts, d.h. von der Vergangenheit in die Zukunft, gerichtet ist. Solches wird als Vorwärtsverhalten bezeichnet. Ursachen in Eingangsgrößen $u_t$ zu vorangegangenen Zeitpunkten (t-2), (t-1), ... führen zu (bemerkbaren) Wirkungen in Ausgangsgrößen $y_t$ zum Zeitpunkt (t bzw. t+1). Dabei werden die Eingangsgrößen $u_t$ durch die neuronale Ursachen-Wirkungs-Struktur auf die Ausgangsgrößen $y_t$ abgebildet.

Die zweite neuronale Teilstruktur ist derart angepasst, dass deren zweites Abbildungsverhalten ein Rückwärtsverhalten des dynamischen Systems beschreibt.

Diese zweite "rückwärtsgerichtete" neuronale Netzstruktur, welche durch entsprechende aus [1],[2] oder [5] bekannten neuronalen Strukturen abgebildet werden kann, ist insbesondere geeignet, um Wirkungs-Ursachenzusammenhänge nachzubilden bzw. zu erkennen.

Diese zweite "rückwärtsgerichtete" neuronale Teilstruktur ist damit insbesondere geeignet für die Durchführung einer Wirkungs-Ursachenanalyse, um damit eine kausale Synthese vorzubereiten.

Bei dieser (Wirkungs-Ursache-)Teilstruktur wird ein zeitlich rückwärts gerichteter Informationsfluss, d.h. ein von der Zukunft in die Vergangenheit gerichteter Informationsfluss, erzeugt. Solches wird als Rückwärtsverhalten bezeichnet. Wirkungen in Ausgangsgrößen $y_t$ zum Zeitpunkt (t) "führen" bzw. haben ihre Ursachen in Eingangsgrößen $u_t$ zum Zeitpunkt (t-1), (t-2), .... Dabei werden in umgekehrter Weise zur Ursachen-Wirkungs-Struktur Ausgangsgrößen $y_t$ (als Eingangsgrößen der zweiten neuronalen Teilstruktur) auf die Eingangsgrößen $u_t$ (als Ausgangsgrößen der zweiten neuronalen Teilstruktur) abgebildet.

Ferner ist die erste "vorwärtsgerichtete" neuronale Teilstruktur insbesondere geeignet, einen Einfluss von Marktmechanismen auf das dynamische System zu berücksichtigen.

Die zweite "rückwärtsgerichtete" neuronale Teilstruktur ist insbesondere dazu geeignet, einen planerische Einfluss auf das dynamische System zu berücksichtigen.

Entsprechend diesem "vorwärtsgerichteten" Ursache-Wirkungszusammenhang (Kausalität) und dem "rückwärtsgerichteten" Wirkungs-Ursachezusammenhang (Retrokausalität) kann die neuronale Struktur aus erster und zweiter neuronalen Teilstruktur als Causal-Retro-Causal Neural Network bezeichnet werden.

Bei einer Weiterbildung ist bzw. sind die erste und/oder die zweite neuronale Teilstruktur ein über mehrere Zeitpunkte entfaltetes neuronales Netz, beispielsweise eine TDRNN, bzw. über mehrere Zeitpunkte entfaltete neuronale Netze, bei welchem bzw. bei welchen eine zeitliche Dimension des beschriebenen dynamischen Systems als räumliche Dimension entwickelt wird.

Darüber hinaus kann es sinnvoll sein, dass die erste und/oder zweite neuronale Teilstruktur als Error-Correction-Recurrent-Neural-Network (ECRNN) ausgestalten ist/sind. Grundlagen solcher ECRNN sind in [6] beschrieben und können entsprechend in die neuronalen Teilstrukturen eingebaut werden.

Bei einer Ausgestaltung ist vorgesehen, das bekannte Systemsverhalten des dynamischen Systems unter Verwendung historischer Systemdaten zu ermitteln.

Die Näherung für das zukünftige Systemverhalten des dynamischen Systems kann derart ermittelt werden, dass das bekannte Systemverhalten in Abschnitte vorgebbarer Zeitlängen, wie ein Tag oder eine Stunde, unterteilt wird. Zu den Abschnitten werden dann zugehörige Abschnittssystemverhalten ermittelt.

Aus den Abschnitten können bestimmte Abschnitte mit den jeweiligen zugehörigen Abschnittssystemverhalten ausgewählt werden. Unter Verwendung dieser ausgewählten Abschnitte und der ausgewählten zugehörigen Abschnittssystemverhalten kann bei Berücksichtigung eines kalendarischen Effekts die Näherung ermittelt werden.

In einer Ausgestaltung werden solche Abschnitte ausgewählt, deren zugehöriges Abschnittssystemverhalten ein signifikantes Verhalten aufweist.

Bei der Ermittlung der Näherung für das zukünftige Systemverhalten des dynamischen Systems unter Verwendung der ausgewählten Abschnittssystemverhalten kann ein Systemverhalten zwischen den ausgewählten Abschnittssystemverhalten interpoliert und/oder gemittelt und/oder historische Abschnittssystemverhalten eingefügt werden/wird.

In einer Weiterbildung wird die Erfindung eingesetzt zu einer Prognose eines Energieverbrauchs, insbesondere eines Verbrauchs von einer Gasmenge. Entsprechend kann die Erfindung auch für eine Stromverbrauchsprognose eingesetzt werden.

Andere Einsatzszenarien sind vorstellbar, wie bei ökonomischen Systemen (Finanzdienstleistungen, Banken, Versicherungen) oder Industriesystemen (Produktionssysteme, Industrieanlagen, Logistiksysteme).

Ein Ausführungsbeispiel der Erfindung ist in Figuren dargestellt und wird im weiteren näher erläutert.

Es zeigen

Figuren 1a und 1b      Skizze einer zweistufigen Vorgehensweise bei einer Energieprognose (1a: erste Stufe: Ähnlichkeitsanalyse; 1b: zweite Stufe: Kausalitätsanalyse) gemäß einem Ausführungsbeispiel;

Figur 2      eine Skizze einer allgemeinen Beschreibung eines dynamischen Systems;

Figur 3      eine Skizze eines CRCNN mit grundlegenden funktionalen Beziehungen;

Figur 4      eine Skizze, welche einen historischen Verlauf eines Energie-/Gasverbrauchs zeigt (Wochendaten für 01/92 - 10/99);

Figur 5      eine Skizze einer Anordnung eines TDRNN, welche mit endlich vielen Zuständen über die Zeit entfaltet ist;

Figur 6      eine Skizze einer zum "overshooting" geeigneten Weiterbildung eines TDRNN;

Figur 7      eine Skizze eines ECRNN mit grundlegenden funktionalen Beziehungen.

**Ausführungsbeispiel: Energie-/Gasverbrauchsprognose**

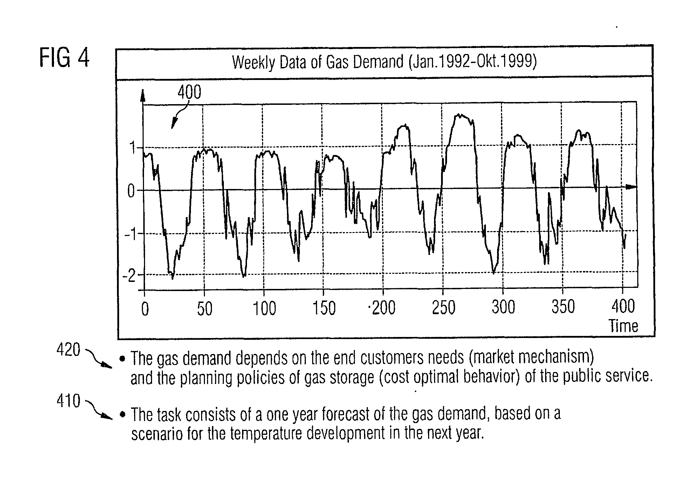

Aufgabenstellung (Fig.4)

Fig.4 zeigt eine Fragestellung 410 aus einem ökonomischen Umfeld, welche durch die im Rahmen des folgenden Ausführungsbeispiels der Erfindung beschriebene Vorgehensweise gelöst wird.

Gesucht wird eine Prognose für einen Energieverbrauch bzw. Gasverbrauch für ein zukünftiges Jahr 2001, basierend auf ein vorgegebenes Szenario einer Temperaturentwicklung für den Prognosezeitraum.

Fig.4 zeigt beispielhaft für einen Energieverbrauchsverlauf einen historischen Verlauf 400 eines Energie-/Gasverbrauchs basierend auf Wochenverbrauchsdaten für einen Zeitraum 01/92 - 10/99.

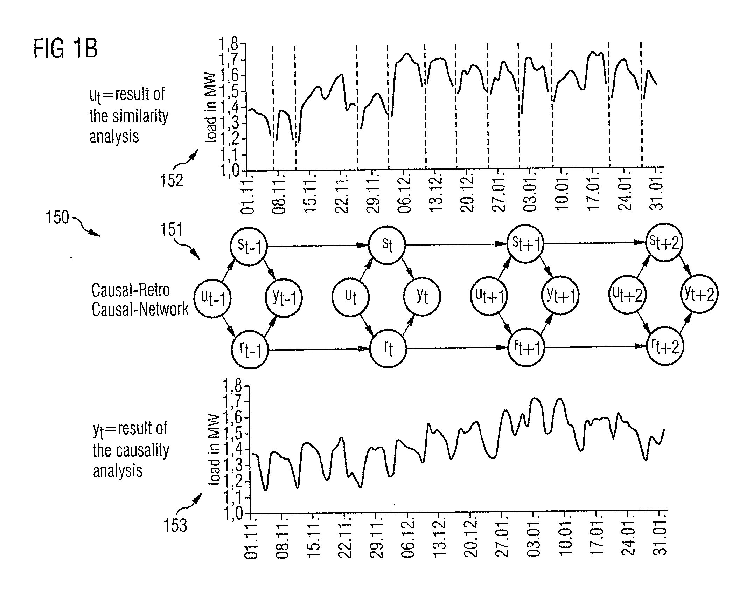

Der Gasverbrauch ist dabei im Allgemeinen abhängig von einer Nachfrage von Kunden (Marktmechanik) und einer Planungsstrategie (Kostenminimierung) für eine Gasbevorratung von Versorgungsunternehmen (planerischer Einfluss) 420. Vorgehensweise (Fig.1a und Fig.1b)

Fig.1a und Fig.1b zeigen eine für die Energieverbrauchsprognose 2001 verwendete Vorgehensweise.

Fig.1a zeigt einen ersten Schritt der Vorgehensweise, eine Ähnlichkeitsanalyse (Näherungsschritt). Fig.1b zeigt einen zweiten Schritt der Vorgehensweise, eine Kausalitätsanalyse (Nachkorrektur). Ein Ergebnis des ersten Schritts ist zugleich Ausgangs- bzw. Eingangsgröße für den zweiten Schritt.

Schritt 1: Ähnlichkeitsanalyse (Fig. la, 110)

Bei der Ähnlichkeitsanalyse 110 wird ein historischer, bekannter Energieverbrauchsverlauf, in diesem Fall der Energieverbrauch für das Jahr 2000 111, in Zeitabschnitte von jeweils einem Tag, sogenannte Tagesscheiben, unterteilt.

Weiterer werden signifikante Energieverbrauchsmuster 120, 121, welche aus einer oder mehreren zusammenhängenden Tagesscheiben bestehen können, aus dem historischen Energieverbrauchsverlauf 2000 ausgewählt.

Signifikante Energieverbrauchsmuster 120, 121 können dabei Muster sein, die in ihrer Verlaufsform außergewöhnlich, wie Energieverbrauchsspitzen, sind. Auch signifikant sind Energieverbrauchsmuster an signifikanten Tagen, wie Feiertage (Weihnachten, Ostern) oder Ferienbeginn.

Solche derart ausgewählten Energieverbrauchsmuster werden basierend auf den entsprechenden Tagesscheiben unter Berücksichtigung eines kalendarischen Effekts in das zu prognosti zierende Jahr 2001 bzw. in den zu prognostizierenden Zeitraum 2001 übertragen bzw. projiziert 130, 131.

Unter dem kalendarischen Effekt ist dabei zu verstehen, dass beispielsweise eine "Tagesscheibe" bzw. der Energieverbrauchsverlauf an Ostern 2000 (historisch) als prognostizierte, genäherte "Tagesscheibe" bzw. Energieverbrauchsverlauf für Ostern 2001 (Näherungsprognose) angenommen wird (trotz Datumsunterschied zwischen Ostern 2000 und 2001).

Entsprechend wird mit allen ausgewählten signifikanten Energieverbrauchsmuster 120, 121 aus 2000 bei Übertragung in 2001 verfahren 130, 131.

Noch im genäherten, prognostizierten Energieverbrauchsverlauf von 2001 auftretende (Verlaufs-)Lücken 140 können nun geschlossen werden.

Dies kann durch Interpolation zwischen den ins Jahr 2001 projizierten signifikanten Energieverbrauchsverläufen 120, 121 aus 2000 und/oder Mittelung und/oder Verwendung plausibler historischer Verbrauchsverläufe geschehen.

Ergebnis dieses ersten Schritts, der Ähnlichkeitsanalyse 110, ist eine Näherung für den prognostizierten Energieverbrauchsverlauf für 2001 112.

Schritt 2: Kausalitätsanalyse (Fig. 1b, 150)

Dieser genäherte, prognostizierte Energieverbrauchsverlauf 112, 152 dient nun als Ausgangsgröße für den zweiten Schritt, der Kausalitätsanalyse 150. Im Ergebnis liefert die Kausalitätsanalyse 150 die gesuchte Energieverbrauchsprognose 2001 153.

Die Kausalitätsanalyse 150 wird unter Verwendung einer neuronalen Netzstruktur, einem sogenannten Kausal-Retro-Kausal Neural Network (CRC NN) 151 bzw.300 (Fig.3), durchgeführt.

Neuronale Netzstruktur - CRC NN (Fig.3)

Fig.3 zeigt eine grundlegende Struktur 300 mit entsprechenden funktionalen Beziehungen eines CRCNN.

Bei diesem CRCNN sind zwei neuronale Teilstrukturen 310, 320 miteinander gekoppelt. Dabei hängen ein erster innerer Teilzustand $s_t$ (311 - 314) der ersten neuronalen Teilstruktur 310 und ein zweiter inneren Teilzustand rt (321 - 324) der zweiten neuronalen Teilstruktur 320 gemäß folgenden Vorschriften von der Eingangsgröße $u_t$ (301 - 304),dem ersten inneren Teilzustand $s_{t-1}$ (311 - 314),dem zweiten inneren Teilzustand $r_{t+1}$ (321 - 324) sowie Parametervektoren $v_s$, $v_t$, $v_y$ ab:

$$s_t = NN(v_s, s_{t-1}, u_t), \tag{8}$$

$$r_t = NN(v_r, r_{t+1}, u_t) \tag{9}$$

$$y_t = NN(v_y, s_t, r_t) \tag{10}$$

wobei mit NN(.) eine durch das neuronale Netz vorgegebene Abbildungsvorschrift bezeichnet wird.

Verbindungen zwischen den Neuronen des CRCNN sind gewichtet. Die Gewichte sind in Parametervektoren $v_s$, $v_t$, $v_y$ zusammengefasst.

Das CRCNN 300 gemäß Fig.3 ist ein über vier Zeitpunkte, t-1, t, t+1 und t+2, entfaltetes Neuronales Netz (vgl. TDRNN, Fig.5).

Grundzüge eines über eine endliche Anzahl von Zeitpunkten entfaltetes Neuronalen Netzes sind in [2] und im obigen im Zusammenhang mit dem bekannten TDRNN (vgl. Fig.5) beschrieben.

Die Eingangsgröße $u_t$ (301 - 304) ist dabei das Ergebnis der Ähnlichkeitsanalyse aus der ersten Stufe (110), d.h. der in der ersten Stufe ermittelte genäherte Verlauf des prognostizierten Energieverbrauchs 112, 152.

Die Ausgangsgröße $y_t$ (341 - 344) ist dabei das gewünschte Ergebnis der Kausalitätsanalyse der zweiten Stufe (150), d.h. der in der zweiten Stufe ermittelte nachkorrigierte Verlauf des prognostizierten Energieverbrauchs 153.

Mögliche Realisierungen der oben beschriebenen Ausführungsbeispiele können mit dem Programm SENN, Version 2.3 durchgeführt werden.

In diesem Dokument sind folgende Veröffentlichungen zitiert:

[1] S. Haykin, Neural Networks: A Comprehensive Foundation, Prentice Hall, Second Edition, ISBN 0-13-273350-1, S. 732-789, 1999.

[2] David E. Rumelhart et al., Parallel Distributed Processing, Explorations in the Microstructure of Cognition, Vol. 1: Foundations, A Bradford Book, The MIT Press, Cambridge, Massachusetts, London, England, 1987

[3] H. Rehkugler und H. G. Zimmermann, Neuronale Netze in der Ökonomie, Grundlagen und finanzwirtschaftliche Anwendungen, Verlag Franz Vahlen München, ISBN 3-8006-1871-0, S. 3-90, 1994.

[4] WO00/08599.

[5] WO00/55809.

[6] Zimmermann H.G., Neuneier R., Grothmann R., Modelling of Dynamic Systems by Error-Correction-Neural-Networks, in Soofe and Cao (Eds.), Forecasting Financial Data, Kluwer Verlag, ISBN 0792376803, 2002.

[7] WO02/27654.

**Patentansprüche**

1. Verfahren zur Ermittlung eines zukünftigen Systemverhaltens eines dynamischen Systems,

   - bei dem unter Verwendung eines bekannten Systemsverhaltens (111) des dynamischen Systems durch einen Ähnlichkeitsvergleich (110) eine Näherung (112) für das zukünftige Systemverhalten (153) ermittelt wird,
   - bei dem unter Verwendung der Näherung für das zukünftige Systemverhalten (153) des dynamischen Systems und unter Verwendung einer neuronalen Netzstruktur (300) das zukünftige Systemverhalten (153) ermittelt wird, wobei die Näherung (112) für das zukünftige Systemverhalten (153) des dynamischen Systems der neuronalen Netzstruktur (300) als Eingangsgröße (301-304) zugeführt wird und eine Ausgangsgröße (341-344) der neuronalen Netzstruktur (300) das zukünftige Systemverhalten (153) repräsentiert;

   **dadurch gekennzeichnet, dass**
   die neuronale Netzstruktur (300) zwei miteinander gekoppelte Teilstrukturen (310, 320) aufweist, wobei eine erste neuronale Teilstruktur (310) derart angepasst ist, dass deren erstes Abbildungsverhalten ein Vorwärtsverhalten des dynamischen Systems beschreibt und wobei eine zweite neuronale Teilstruktur (320) derart angepasst ist, dass deren zweites Abbildungsverhalten ein Rückwärtsverhalten des dynamischen Systems beschreibt.

2. Verfahren nach Anspruch 1,

   - bei dem die erste und/oder die zweite neuronale Teilstruktur (310, 320) ein über mehrere Zeitpunkte entfaltetes neuronales Netz ist/über mehrere Zeitpunkte entfaltete neuronale Netze sind.

3. Verfahren nach einem der vorangehenden Ansprüche,

   - bei dem das dynamische System marktmechanischen Einflüssen und planerischen Einflüssen unterworfen ist.

4. Verfahren nach Anspruch 3,

   - bei dem das dynamische System ein "Human-Controlled"-System ist.

5. Verfahren nach Anspruch 3 oder 4,

   - bei dem die erste neuronale Teilstruktur (310) einen Einfluss von Marktmechanismen auf das dynamische System berücksichtigt und/oder
   - bei dem die zweite neuronale Teilstruktur (320) einen planerische Einfluss auf das dynamische System berücksichtigt.

6. Verfahren nach einem der vorangehenden Ansprüche,

   - bei dem die neuronale Netzstruktur (300) ein Causal-Retro-Causal Network ist.

**7.** Verfahren nach einem der vorangehenden Ansprüche,

- bei dem das bekannte Systemsverhalten (111) des dynamischen Systems unter Verwendung historischer Systemdaten ermittelt wird.

**8.** Verfahren nach einem der vorangehenden Ansprüche,

- bei dem die Näherung (112) für das zukünftige Systemverhalten (153) des dynamischen Systems derart ermittelt wird, dass

- das bekannte Systemverhalten (111) in Abschnitte vorgebbarer Zeitlängen (120, 121) unterteilt wird, wobei zu den Abschnitten (120, 121) zugehörige Abschnittssystemverhalten ermittelt werden und
- unter Verwendung ausgewählter Abschnitte (120, 121) mit dem jeweils zugehörigen ausgewählten Abschnittssystemverhalten bei Berücksichtigung eines kalendarischen Effekts die Näherung (112) ermittelt wird.

**9.** Verfahren nach Anspruch 8,
bei dem solche Abschnitte (120, 121) ausgewählt werden, deren zugehöriges Abschnittssystemverhalten ein signifikantes Verhalten aufweist.

**10.** Verfahren nach Anspruch 8 oder 9,

- bei dem bei der Ermittlung der Näherung (112) für das zukünftige Systemverhalten (153) des dynamischen Systems unter Verwendung der ausgewählten Abschnittssystemverhalten ein Systemverhalten zwischen den ausgewählten Abschnittssystemverhalten interpoliert und/oder gemittelt und/oder historische Abschnittssystemverhalten eingefügt werden/wird.

**11.** Verfahren nach einem der vorangehenden Ansprüche, eingesetzt zu einer Prognose des zukünftigen Systemverhaltens (153) des dynamischen Systems derart, dass das ermittelte zukünftige Systemverhalten (153) als die Prognose verwendet wird.

**12.** Verfahren nach einem der vorangehenden Ansprüche, eingesetzt zu einer Prognose eines Energieverbrauchs, insbesondere eines Verbrauchs von einer Gasmenge.

**13.** Computerprogramm mit Programmcode-Mitteln, um alle Schritte gemäß Anspruch 1 durchzuführen, wenn das Programm auf einem Computer oder Teile des Programms auf mehreren Computern ausgeführt wird bzw. werden.

**14.** Computerprogramm mit Programmcode-Mitteln gemäß Anspruch 13, die auf einem oder mehreren computerlesbaren Datenträger gespeichert sind.

**15.** Computerprogramm-Produkt mit auf einem maschinenlesbaren Träger gespeicherten Programmcode-Mitteln, um alle Schritte gemäß Anspruch 1 durchzuführen, wenn das Programm auf einem Computer ausgeführt wird.


**Claims**

**1.** Method for determining a future system response of a dynamic system,

- in which an approximation (112) of the future system response (153) is determined using a known system response (111) of the dynamic system by means of a similarity comparison ((110),
- in which the future system response (153) is determined using the approximation of the future system response (153) of the dynamic system and using a neural network structure (300), with the approximation (112) of the future system response (153) of the dynamic system being fed to the neural network structure (300) as an input quantity (301-304) and an output quantity (341-344) of the neural network structure (300) representing the future system response (153)

**characterized in that**
the neural network structure (300) has two linked sub-structures (310, 320), a first neural sub-structure (310) being tailored such that its first mapping response describes a forward response of the dynamic system and a second neural sub-structure (320) being tailored such that its second mapping response describes a backward response of the dynamic system.

2. Method according to claim 1,

    - in which the first and/or the second neural sub-structure (310, 320) is a neural network developed over one or a plurality of points in time/are neural networks developed over one or a plurality of points in time.

3. Method according to one of the preceding claims,

    - in which the dynamic system is subject to the influences of market mechanisms and planning influences.

4. Method according to claim 3,

    - in which the dynamic system is a human-controlled system.

5. Method according to claim 3 or 4,

    - in which the first neural sub-structure (310) takes into consideration an influence of market mechanisms on the dynamic system and/or
    - in which the second neural sub-structure (320) takes into consideration a planning influence on the dynamic system.

6. Method according to one of the preceding claims,

    - in which the neural network structure (300) is a causal-retro-causal network.

7. Method according to one of the preceding claims,

    - in which the known system response (111) of the dynamic system is determined using historic system data.

8. Method according to one of the preceding claims,

    - in which the approximation (112) of the future system response (153) of the dynamic system is determined such that
    - the known system response (111) is subdivided into segments of predefinable duration (120, 121), with segment system responses associated with the segments (120, 121) being determined and
    - the approximation (112) is determined using selected segments (120, 121) with the respectively associated selected segment system response taking into consideration a calendar effect.

9. Method according to claim 8,

    - in which segments (120, 121) are selected, the associated segment system response of which exhibits a significant response.

10. Method according to claim 8 or 9,

    - in which when determining the approximation (112) of the future system response (153) of the dynamic system using the selected segment system response, a system response is interpolated between the selected segment system responses and/or a mean is determined and/or (a) historic segment system response(s) is/are inserted.

11. Method according to one of the preceding claims,
used to forecast the future system response (153) of the dynamic system such that the determined future system response (153) is used as the forecast.

12. Method according to one of the preceding claims,
used to forecast energy consumption, in particular consumption of a quantity of gas.

**13.** Computer program with program code means, to carry out all steps according to claim 1, when the program is executed on a computer or parts of the program are executed on a plurality of computers.

**14.** Computer program with program code means according to claim 13, which are stored on one or a plurality of computer-readable data media.

**15.** Computer program product with program code means stored on a machine-readable medium, to carry out all steps according to claim 1, when the program is executed on a computer.

**Revendications**

**1.** Procédé de détermination d'un comportement systémique futur d'un système dynamique, dans lequel :

- une approximation (112) du comportement systémique futur (153) est déterminée en utilisant un comportement systémique connu (11) du système dynamique par une comparaison de la similitude (111);
- le comportement systémique futur (153) est déterminé en utilisant l'approximation du comportement systémique futur (153) du système dynamique et en utilisant une structure de réseau neuronal (300), l'approximation (112) du comportement systémique futur (153) du système dynamique étant amenée à la structure de réseau neuronal (300) en tant que grandeur d'entrée (301-304) et une grandeur de sortie (341-344) de la structure de réseau neuronal (300) représentant le comportement systémique futur (153),

**caractérisé en ce que**
la structure de réseau neuronal (300) comporte deux structures partielles (310, 320) couplées entre elles, une première structure neuronale partielle (310) étant adaptée pour que son premier comportement de représentation décrive un comportement prospectif du système dynamique et une deuxième structure neuronale partielle (320) étant adaptée pour que son deuxième comportement de représentation décrive un comportement rétrospectif du système dynamique.

**2.** Procédé selon la revendication 1, dans lequel la première et/ou la deuxième structure neuronale partielle (310, 320) est un réseau neuronal étalé sur plusieurs instants / sont des réseaux neuronaux étalés sur plusieurs instants.

**3.** Procédé selon l'une des revendications précédentes, dans lequel le système dynamique est soumis à des influences de la mécanique des marchés et à des influences de planification.

**4.** Procédé selon la revendication 3, dans lequel le système dynamique est un système contrôlé par l'homme.

**5.** Procédé selon la revendication 3 ou 4, dans lequel :

- la première structure neuronale partielle (310) tient compte d'une influence de mécanismes de marché sur le système dynamique et/ou
- la deuxième structure neuronale partielle (320) tient compte d'une influence de planification sur le système dynamique.

**6.** Procédé selon l'une des revendications précédentes, dans lequel la structure neuronale de réseau (300) est un réseau causal-rétro-causal.

**7.** Procédé selon l'une des revendications précédentes, dans lequel le comportement systémique connu (111) du système dynamique est déterminé en utilisant des données historiques du système.

**8.** Procédé selon l'une des revendications précédentes, dans lequel l'approximation (112) du comportement systémique futur (153) du système dynamique est déterminée de manière telle que :

- le comportement systémique connu (111) est subdivisé en sections de longueurs de temps prédéterminables (120, 121), des comportements systémiques des sections associés aux sections (120, 121) étant déterminés et
- l'approximation (112) étant déterminée, compte tenu d'un effet de calendrier, en utilisant des sections sélectionnées (120, 121) avec le comportement systémique sélectionné des sections qui leur est respectivement associé.

9. Procédé selon la revendication 8, dans lequel sont sélectionnées des sections (120, 121) dont le comportement systémique associé présente un comportement significatif.

10. Procédé selon la revendication 8 ou 9, dans lequel, lors de la détermination de l'approximation (112) du comportement systémique futur (153) du système dynamique avec utilisation des comportements systémiques sélectionnés des sections, un comportement systémique est interpolé entre les comportements systémiques sélectionnés des sections et/ou on en fait la moyenne et/ou des comportements systémiques historiques des sections sont insérés.

11. Procédé selon l'une des revendications précédentes, mis en oeuvre pour prédire le comportement systémique futur (153) du système dynamique de manière telle que le comportement systémique futur déterminé (153) soit utilisé comme étant la prédiction.

12. Procédé selon l'une des revendications précédentes, mis en oeuvre pour prédire une consommation d'énergie, et plus particulièrement une consommation d'une quantité de gaz.

13. Programme informatique avec des moyens de code de programme pour exécuter toutes les étapes selon la revendication 1 lorsque le programme est exécuté sur un ordinateur ou que des parties du programme sont exécutées sur plusieurs ordinateurs.

14. Programme informatique avec des moyens de code de programme selon la revendication 13 qui sont stockés sur un ou plusieurs supports de données lisibles par ordinateur.

15. Produit de programme informatique avec des moyens de code de programme stockés sur un support lisible par machine pour exécuter toutes les étapes selon la revendication 1 lorsque le programme est exécuté sur un ordinateur.

EP 1 627 263 B1

## FIG 1A

Signifikantes Systemverhalten
unbestimmter Zeitabschnitte 121

Näherungsprognose

genäherter
Verlauf

*) Interpolation
Mittelung
historischer
Daten

The historical load curve is segmented in daily slices.
Next year's raw forecast is based on these time slices and calendar effects.
$u_t$; 152

FIG 1B

EP 1 627 263 B1

$u_t$=result of
the similarity
analysis

152

150

151

Causal-Retro
Causal-Network

$y_t$=result of
the causality
analysis

153

FIG 2

## FIG 3

Causal market demand modeling

$$s_{t+1}=f(s_t,u_t)$$

$$r_t=g(r_{t+1},u_t)$$

$$y_t=h(s_t,r_t)$$

Retro causal influence of the planning

In the future part of the network we have to fill in scenarios of the external drivers $u_t$.

EP 1 627 263 B1

## FIG 4

**Weekly Data of Gas Demand (Jan.1992-Okt.1999)**

420 • The gas demand depends on the end customers needs (market mechanism) and the planning policies of gas storage (cost optimal behavior) of the public service.

410 • The task consists of a one year forecast of the gas demand, based on a scenario for the temperature development in the next year.

FIG 5

EP 1 627 263 B1

**FIG 6**

Overshooting is the extension of the autonomous part of the dynamics.
With overshooting, learning emphasizes the autonomous part of the system.
By preprocessing $u_{\tau \leq t} = \text{scale}((x_\tau - x_{\tau}-1)/x_{\tau}-1)$ we can interpret $u_{\tau > 1} = 0$
as assumption of a constant environment.

The dimension of the horizontal flow is the embedding dimension of the dynamical system.
Without overshooting in an open system the embedding dimension is always underestimated.

# FIG 7

$$s_{t+1} = f(s_t, u_t, y_t - y_t^d)$$

$$y_t = g(s_t)$$

$$\frac{1}{T}\sum_{t=1}^{T}(y_t - y_t^d)^2 \rightarrow \min_{f,g}$$

$$s_{t+1} = \tanh\left(As_t + Bu_t + D\tanh\underbrace{(Cs_t - y_t^d)}_{z_t}\right)$$

$$y_t = Cs_t$$

$$\frac{1}{T}\sum_{t=1}^{T}(y_t - y_t^d)^2 \rightarrow \min_{A,B,C,D}$$

If the observed value $y_{t+1}^d$ is missing, $z_{t+1}$ provides a forecast $y_{t+1}$.

Because we assume that our model is correct, we cut the connections to $s_{t+2}$. This applies to all following steps.

Remark: Include shared connections between bias $\rightarrow \{z,y\}$ and between bias $\rightarrow$ s.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5461699 A
- WO 0008599 A
- WO 0055809 A
- WO 0227654 A

**In der Beschreibung aufgeführte Nicht-Patentliteratur**

- **S. HAYKIN.** Neural Networks: A Comprehensive Foundation. Prentice Hall, 1999, 732-789
- Parallel Distributed Processing. **DAVID E. RUMELHART et al.** Explorations in the Microstructure of Cognition, Vol. 1: Foundations, A Bradford Book. The MIT Press, 1987, vol. 1
- **H. REHKUGLER ; H. G. ZIMMERMANN.** Neuronale Netze in der Ökonomie, Grundlagen und finanzwirtschaftliche Anwendungen. Verlag Franz, 1994, 3-90
- Modelling of Dynamic Systems by Error-Correction-Neural-Networks. **ZIMMERMANN H.G. ; NEUNEIER R. ; GROTHMANN R.** Forecasting Financial Data. Kluwer Verlag, 2002